# EUROPÄISCHE PATENTANMELDUNG

(11) **EP 1 469 430 A2**
(43) Veröffentlichungstag der Anmeldung: **20.10.2004**
(21) Anmeldenummer: 03023453.8
(22) Anmeldetag: 18.10.2003
(51) Int. Cl.: G07D 7/00

(54) **Verfahren zur Annahme und/oder Authentifizierung von Dokumenten**

(30) Priorität: 15.04.2003 DE 10317397
(71) Anmelder: SCHEIDT & BACHMANN GMBH, D-41238 Mönchengladbach (DE)
(72) Erfinder: Miller, Norbert, Dr., 41063 Mönchengladbach (DE); Höffges, Peter, 41176 Mönchengladbach (DE); Horn, Erich, 01801 Woburn (US)
(74) Vertreter: Stenger, Watzke & Ring Patentanwälte

(57) **Zusammenfassung**

Die Erfindung betrifft ein Verfahren zur Annahme und/oder Authentifizierung von Dokumenten, insbesondere Banknoten sowie eine Vorrichtung zur Ausführung des Verfahrens.

Es ist die Aufgabe der vorliegenden Erfindung, ein gattungsgemäßes Verfahren zur Authentifizierung von Dokumenten sowie eine Vorrichtung derart weiterzubilden, daß der Grad an sicherer Authentifizierung erhöht werden kann.

Es wird ein Verfahren zur Annahme und/oder Authentifizierung von Dokumenten, insbesondere Banknoten, vorgeschlagen, wobei das Dokument mittels einer Eingabeeinheit einer Prüfeinheit zugeführt wird, das Dokument authentifiziert und für eine weitere Verarbeitung freigegeben wird und wobei das Authentifizieren durch eine Kombination wenigstens zweier unterschiedlicher Prüfmethoden durchgeführt wird.

## Beschreibung

Die Erfindung betrifft ein Verfahren zur Annahme und/oder Authentifizierung von Dokumenten, insbesondere Banknoten sowie eine Vorrichtung zur Ausführung des Verfahrens.

Im Wirtschaftsverkehr ist eine Vielzahl von Zahlungssystemen, insbesondere Automaten, bekannt, mit denen ein Kunde Waren und/oder Dienstleistungen gegen Bezahlung durch Bargeld, Gutscheine und dergleichen erwerben kann. Der Automat nimmt das Zahlungsmittel entgegen, prüft dessen Wert und Gültigkeit und führt ein für gültig befundenes Zahlungsmittel einem Speicher zu, in dem dieses Zahlungsmittel gespeichert wird. Derartige Zahlungssysteme werden vielfach auch zum Verkauf von Fahrscheinen, beispielsweise für Personenbeförderungsmittel und dergleichen, eingesetzt.

Bekannte Zahlungssyteme, wie beispielsweise ein Verkaufsautomat zum Verkauf von Fahrscheinen für ein öffentliches Verkehrsmittel, weisen üblicherweise eine Öffnung auf, in die Zahlungsmittel einzeln seriell eingebbar sind. Die einzelnen Zahlungsmittel wie Banknoten oder Gutscheine werden geprüft und in einem Zwischenspeicher gehalten, bis der Betrag der eingegebenen Zahlungsmittel dem Betrag des Fahrscheins entspricht oder diesen übersteigt.

Im allgemeinen wird das Dokument bzw. die Banknote durch einen Transportmechanismus in das Innere des Automaten hineintransportiert und einer Prüfeinheit zugeführt, in der das Dokument authentifiziert und für die weitere Verarbeitung freigegeben wird. Ein ungültiges Dokument wird über die gleiche oder über eine separate Öffnung wieder ausgegeben. Nachteilig an den bekannten Verfahren ist, daß gerade im Bereich der Banknoten durch die Automaten nur eine Prüfmethode zur Authentifizierung der Banknote angewendet wird. Banknoten weisen in der Regel mehrere Sicherheitsmerkmale auf, mit denen eine Authentifizierung mit hoher Sicherheit erreichbar wäre.

Es ist daher die **Aufgabe** der vorliegenden Erfindung, ein gattungsgemäßes Verfahren zur Authentifizierung von Dokumenten sowie eine Vorrichtung derart weiterzubilden, daß der Grad an sicherer Authentifizierung erhöht werden kann.

Als **Lösung** wird mit der Erfindung ein Verfahren zur Annahme und/oder Authentifizierung von Dokumenten, insbesondere Banknoten, vorgeschlagen, wobei das Dokument mittels einer Eingabeeinheit einer Prüfeinheit zugeführt wird, das Dokument authentifiziert und für eine weitere Verarbeitung freigegeben wird, wobei das Authentifizieren durch eine Kombination wenigstens zweier unterschiedlicher Prüfmethoden durchgeführt wird.

Erstmals ist es somit möglich, durch Überprüfen sehr unterschiedlicher Sicherheitsmerkmale, beispielsweise im Bereich der Banknoten, einen besonders hohen Sicherheitsgrad zu erreichen. Dies ist insbesondere auch deswegen vorteilhaft, da im Vergleich zu Münzen Banknoten in der Regel einen erheblich höheren Wert aufweisen. Ein unkorrektes Prüfergebnis, welches zu einem wirtschaftlichen Schaden führen würde, in der Form, daß eine Banknote als gültig erkannt wird, die tatsächlich ungültig ist, wird erheblich unwahrscheinlicher. Insbesondere können Prüfmethoden miteinander verwendet werden, die physikalisch vollkommen unterschiedliche Merkmale des Dokuments überprüfen.

Es wird ferner vorgeschlagen, daß wenigstens zwei Prüfmethoden aus der Gruppe, die insbesondere Größenprüfung, magnetischer Prüfung, Bildprüfung, Infrarot-Prüfung, UV-Prüfung und Sichtprüfung und weitere umfaßt, verwendet werden. So kann beispielsweise eine Kombination von Größenprüfung und magnetischer Prüfung verwendet werden, insbesondere wenn das Dokument magnetische Eigenschaften aufweist. Es können jedoch auch mehrere Prüfungen verwendet werden, insbesondere natürlich Prüfungen, um alle Merkmale des Dokuments zu erfassen. Dadurch kann ein besonders hoher Sicherheitsstandard erreicht werden. Eine beliebige Auswahl und Anzahl von Prüfmethoden kann verwendet werden.

Es wird ferner vorgeschlagen, daß die Ergebnisse der Prüfmethode verglichen werden. So kann beispielsweise erreicht werden, daß ein Dokument nur dann frei gegeben wird, wenn alle angewendeten Prüfmethoden eine hinreichende Authentifizierung ergeben.

Zusätzlich kann eine Sichtprüfung durchgeführt werden. Im Falle eines nicht authentifizierten Dokuments bzw. einer als ungültig erkannten Banknote kann das Dokument einem Bediener vorgeführt werden. Dazu kann das Dokument optisch erfaßt werden und die optische Erfassung einem Bediener übermittelt werden. Die Übermittlung erfolgt dabei mittels bekannter Kommunikationsmittel.

Es wird weiterhin vorgeschlagen, daß die Sichtprüfung in Abhängigkeit des Wertes des Dokuments durchgeführt werden kann. So kann beispielsweise festgelegt werden, daß die Sichtprüfung nicht bei jedem Dokument durchgeführt wird, um beispielsweise den Gesamtaufwand für die Sichtprüfung gering zu halten. Für Banknoten könnte beispielsweise vorgesehen sein, eine Sichtprüfung erst bei Banknoten mit einem Wert von 100 EUR oder auch 100 US$ durchzuführen.

Die Sichtprüfung kann in Abhängigkeit der Authentifizierungssicherheit durchgeführt werden. Es kann beispielsweise vorgesehen sein, daß bei einem nicht eindeutigen Ergebnis einer der zumindest zwei Prüfmethoden eine Sichtprüfung vorgesehen ist. Dies kann auch vorgesehen sein, wenn Prüfmethoden entgegengesetzte Ergebnisse liefern. Die Wahrscheinlichkeit für die positive Authentifizierung eines ungültigen Dokuments kann deutlich reduziert werden. Darüber hinaus bietet das erfindungsgemäße Verfahren den Vorteil, daß der Aufwand für die Sichtprüfung weiter reduziert werden kann. So kann eine Kombination einer Sichtprüfung zusätzlich zu anderen Prüfmethoden als Funktion des Betrags und der Authentifizierungssicherheit vorgesehen sein.

Es wird ferner vorgeschlagen, daß bei positiver Authentifizierung das Dokument angenommen wird. Das Dokument kann vorteilhaft in einen dafür vorgesehenen Speicher befördert werden. Es kann aber auch vorgesehen sein, daß das Dokument nach der positiven Authentifizierung wieder ausgegeben wird. Im Falle einer negativen Authentifizierung wird vorgeschlagen, daß die Annahme des Dokuments abgelehnt wird. Ein solches Dokument kann entweder einem separaten Speicher für ungültige Dokumente zugeführt oder auch wieder ausgegeben werden. Dazu kann es zu einer dafür vorgesehenen Ausgabeöffnung befördert werden.

Mit der Erfindung wird ferner eine Vorrichtung zur Annahme und/oder Authentifizierung von Dokumenten, insbesondere Banknoten, vorgeschlagen, welche wenigstens zwei jeweils unterschiedliche Prüfmethoden ausführende Prüfstationen zur Authentifizierung des Dokuments und eine Rechnereinheit zum Vergleich der Ergebnisse der Prüfstationen aufweist. Mit jeder Prüfstation kann so ein anderes Sicherheitsmerkmal überprüft werden, wobei die Prüfmethoden unterschiedlich, angepaßt auf das zu überprüfende Sicherheitsmerkmal, ausgewählt sein können. Vorteilhaft können so sehr unterschiedliche Merkmale des Dokuments geprüft werden, um eine hohe Authentifizierungssicherheit zu erreichen.

Weitere Vorteile und Merkmale sind der folgenden Beschreibung eines Ausführungsbeispiels in Bezug auf die zugehörige Zeichnung zu entnehmen. Die Zeichnung ist eine Schemazeichnung und dient nur der Erläuterung des folgenden Ausführungsbeispiels und ist nicht beschränkend. Im Rahmen der vorliegenden Erfindung können auch einzelne Merkmale zu weiteren Ausgestaltungen kombiniert werden.

Die einzige Figur zeigt schematisch den Ablauf eines erfindungsgemäßen Verfahrens.

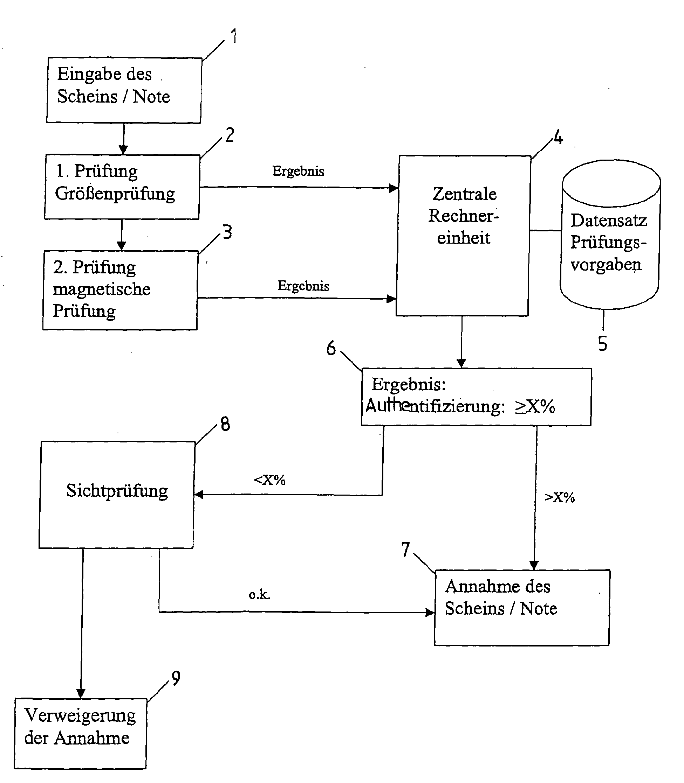

In Fig. 1 ist schematisch in einem Ablaufdiagramm eine beispielhafte Ausführung eines Verfahrens zur Annahme/Authentifizierung von Banknoten dargestellt. Die Banknoten werden einer aus dem Stand der Technik bekannten Eingabeeinheit 1 zugeführt. Von dieser Eingabeeinheit 1 gelangen die zu authentifizierenden Banknoten zunächst zu einer ersten Prüfstation 2, in dem dargestellten Beispiel ist dies eine Größenprüfung. Nachdem die Größenprüfung durchgeführt ist, werden die Banknoten an eine zweite Prüfstation 3, in diesem Falle eine magnetische Prüfung zur Detektion einer auf den Banknoten aufgebrachten magnetischen Druckfarbe zugeführt. Die bei der Größenprüfung und der magnetischen Prüfung erhaltenen Prüfdaten jeder einzelnen Banknote werden einer zentralen Recheneinheit 4 zugeführt. In dieser Recheneinheit 4 sind Prüfungsvorgaben 5 in Form von Datensätzen gespeichert. Die Ergebnisse der durchgeführten Prüfungen werden mit diesen Datensätzen verglichen. Basierend auf diesem Vergleich wird die Wahrscheinlichkeit der Authentizität 6 der geprüften Banknote ermittelt. Erfüllt dieser Wert die vorgegebenen Kriterien, so veranlaßt die zentrale Rechnereinheit 4 die Annahme 7 der Banknote. In dem Fall, daß die errechnete Wahrscheinlichkeit nicht die gegebenen Voraussetzungen erfüllt, veranlaßt die zentrale Rechnereinheit 4 eine Sichtprüfung 8 der betreffenden Banknote. Besteht die Banknote die durchgeführte Sichtprüfung 8, so wird ihre Annahme freigegeben 7, andernfalls wird die Annahme verweigert 9.

Das Ausführungsbeispiel dient lediglich der Erläuterung der vorliegenden Erfindung und ist für diese nicht beschränkend.

### Bezugszeichenliste:

- 1: Eingabeeinheit
- 2: erste Prüfstation
- 3: zweite Prüfstation
- 4: Recheneinheit
- 5: Datensatz / Prüfungsvorgaben
- 6: Ermitteln der Wahrscheinlichkeit der Authentizität
- 7: Banknote annehmen
- 8: Sichtprüfung
- 9: Annahme der Banknote verweigern

## Patentansprüche

1. Verfahren zur Annahme und/oder Authentifizierung von Dokumenten, insbesondere Banknoten, wobei das Dokument mittels einer Eingabeeinheit einer Prüfeinheit zugeführt wird, das Dokument authentifiziert und für eine weitere Verarbeitung freigegeben wird,
**dadurch gekennzeichnet,**
**daß** das Authentifizieren durch eine Kombination wenigstens zweier unterschiedlicher Prüfmethoden durchgeführt wird.

2. Verfahren nach Anspruch 1, **dadurch gekennzeichnet, daß** wenigstens zwei Prüfmethoden aus der Gruppe, die insbesondere Größenprüfung, magnetische Prüfung, Bildprüfung, Infrarot-Prüfung, UV-Prüfung, Sichtprüfung und weitere umfaßt, verwendet werden.

3. Verfahren nach Anspruch 1 oder 2, **dadurch gekennzeichnet, daß** die Ergebnisse der Prüfmethoden verglichen werden.

4. Verfahren nach einem der Ansprüche 1 bis 3, **dadurch gekennzeichnet, daß** eine Sichtprüfung durchgeführt wird.

5. Verfahren nach einem der Ansprüche 1 bis 4, **dadurch gekennzeichnet, daß** die Sichtprüfung in Abhängigkeit des Werts des Dokuments durchgeführt wird.

6. Verfahren nach einem der Ansprüche 1 bis 5, **dadurch gekennzeichnet, daß** die Sichtprüfung in Abhängigkeit der Authentifizierungssicherheit durchgeführt wird.

7. Verfahren nach einem der Ansprüche 1 bis 6, **dadurch gekennzeichnet, daß** das Dokument bei positiver Authentifizierung angenommen und bei negativer Authentifizierung abgelehnt wird.

8. Vorrichtung zur Annahme und/oder Authentifizierung von Dokumenten, insbesondere Banknoten,
**gekennzeichnet durch**
wenigstens zwei jeweils unterschiedliche Prüfmethoden ausführende Prüfstationen zur Authentifizierung des Dokuments und eine Rechnereinheit zum Vergleich der Ergebnisse der Prüfstationen.
